# EUROPEAN PATENT APPLICATION

(11) **EP 4 625 080 A1**
(43) Date of publication of application: **01.10.2025**
(21) Application number: 24167047.0
(22) Date of filing: 27.03.2024
(51) Int. Cl.: G05B 19/418

(54) **SYSTEM FOR VISUALIZING AN AUTOMATION SYSTEM**

(71) Applicant: ABB Schweiz AG, 5400 Baden (CH)
(72) Inventor: Buchegger, Jürgen, 4712 Michaelnbach (AT)
(74) Representative: Patentanwälte Pinter & Weiss OG

(57) **Abstract**

To enhance a visualized representation of an automation system (1) and to improve the possibilities of interactions with the automation system (1) via the visualized representation, a system for visualizing the automation system (1) is proposed, which at least comprises a server unit (2) and at least one client unit (6). The server unit (2) is designed to provide at least one client unit (6) with a visualization application (3), which comprises 360-degree panorama data (PA_DAT) of the automation system (1) and function blocks defining interactions for interaction points(HS) and to integrate the function blocks in such a way into the visualization application (3) that an interaction linked to a respective interaction point (HS) can be triggered by selecting the respective interaction point (HS) embedded in a 360-degree representation of the automation system (1), and which is furthermore designed to exchange machine data (DAT) with the automation system (1) in real-time via at least one interface (4) to make the machine data (DAT) available for the function blocks and the interactions integrated into the visualization application (3). The client unit (6), which is connected to the server unit (2) via a real-time capable communication link (5), is designed to retrieve the visualization application (3) from the server unit (2) and to interpret and execute the received visualization application (3) in such a way, that the 360-degree panorama data (PA_DAT) of the automation system (1) are displayed as 360-degree representation of the automation system (1), wherein the 360-degree representation offers navigation, and that the interaction points (HS), which are displayed in the current displayed section of the 360-degree representation of the automation system (1), can be selected to trigger the interaction associated with the respective interaction point (HS).

## Description

### TECHNICAL FIELD OF THE INVENTION

The present invention relates generally to the field of industrial automation systems. In particular, the invention relates to a system for visualizing an automation system, in particular a robot system, an automated machine and/or a transport system, wherein a client-server model is used for the visualization of the automation system.

### BACKGROUND INFORMATION

Nowadays, automation systems, such as robot systems, transportation systems, are widely used during industrial manufacturing processes in most of the modern manufacturing and production facilities. Most automation systems are derived from manual processes of working on workpieces such as drilling, cutting, welding, etc. and/or of moving the workpieces from one workplace to another, and so on. These systems can use robotic arms, for example, to manipulate the movement of the tool that performs the original function or movers to automatically move the workpieces along a predefined transportation track from one workplace to another. Usually, such an automation system comprises several separate automation components, which are programmed for certain applications or functions and can exchanged data (e.g. machine data, control commands) over a communication system (e.g. field bus system). Such automation components can be machines, gadget or appliances to be controlled (e.g. robots, movers of a transportation systems, drives, etc.), at least one, usually more control units (e.g. programmable logic controllers (PLC), industrial PCs) for controlling the machines and the peripherals. The peripherals comprise devices like sensors, which detect and record machine data, like control variables, measured values, parameter values, etc., during operation and actuators, which then execute control commands. An automation system typically has various moving parts (e.g. robot arms, movers, etc.) and other components, which produce various machine data over time, such as position data, pressure, temperature, speed or other metrics. So, it is of high importance to those involved in operating automation systems to review and monitor those machine data and to have the possibility to intervene, if necessary or in case of emergency.

Usually, automation systems provide corresponding user interfaces, also known as the "human-machine interface" (HMI) or "man-machine interface" (MMI), e.g. as HMI of the respective control unit controlling a machine, gadget, appliance or a part of the automation system and/or as central HMI for e.g. monitoring the whole automation system. The user interface can be used for operation of the automation system, diagnosis, monitoring and/or maintenance of the automation system. The user interface may also provide machine data during operation to present the information to the user and to support operating and monitoring of the respective machine and/or the automation system. It allows the user to monitor the status of the respective machine and/or the whole system, to interact with automation components (e.g. sensors, actuators, etc.) and to intervene during operation of the automation system. The information on the status of the automation system or on single automation components is provided either via control panels with signal lamps, display panels and buttons for interaction or via a software-based visualization system, which provides the user with a suitable computer-implemented visualization of automation system and computer-implemented HMIs. The visualization system offers the possibility to display a representation of the automation system or a machine or a part of the automation system as visualization of the automation system or the respective machine or part of the automation system. Additionally, the visualization system may provide the possibility to display information on the single automation components and/or machine data to the user on a variety of display devices (e.g. PCs, notebooks, tablet computers, etc.) and provides the possibility for the user to interact with automation system and/or its components.

It is not uncommon that a client-server model, especially a web-based client-server model, is used for the visualization of the automation system. The visualization may be implemented as an application which run on a server, e.g. web server. The server can be integrated into a control unit (e.g. PLC, industrial PC) associated with a machine, gadget, appliance or a part of the automation system and/or into the central control unit of the automation system. A visualization can be retrieved from the server by a client via a communication connection provided by a wired or wireless communication network (e.g. Local Area Network, W-LAN). The client may run on a display device (e.g. PC, laptop computer, tablet PC, etc.) and may display a representation of the automation system, e.g. as graphical user interface, to the user for operating, diagnosis, monitoring and/or maintenance of the automation system. In case of a web-based solution the visualization may be retrieved as a web page via a web browser provided on the display device. Quite often such visualizations are implemented with special visualization software, which can also be integrated into the respective control unit of the automation system. The visualization software offers appropriate engineering tools and/or an application framework for the visualization of the automation system. Especially, the application framework may provide functional building blocks to design machine specific, task specific and/or user specific views and graphical user interfaces for display on the client. Additionally, the machine data provided by the server are linked to the visualization via an appropriate interface and communication technology (e.g. OPC UA, MQTT). Usually, globally accepted web standards like HTML5, CSS3 and/or JavaScript are used as technologies for embedding visualizations in a website.

A plan or, where appropriate, a three-dimensional graphical representation of the automation system or machine is often used as the basis for the visualization of the automation system, as shown in DE 103 45 886 A1, for example. The plan or graphical representation of the automation system is displayed to the user, sometimes in combination with machine data to be monitored. Furthermore, the extent of possible interactions with the automation system using the plan or graphical representation may be restricted. This has the disadvantage that it is easy to lose the overview, particularly with more complex automation systems or machines, especially if machine data from automation components to be monitored is displayed in this representation.

### SUMMARY

The objective of the present disclosure is to provide a system for visualizing an automation system, with which a visualized representation of the automation system and the possibility of interactions with the automation system via that representation are enhanced.

These and other objectives are solved by a system for visualizing an automation system according to the independent claim. Advantageous embodiments of the present invention are described by the dependent claims.

According to the invention, these and other objectives are achieved by a system for visualizing an automation system, in particular a robot system, an automated machine and/or a transportation system. This system at least comprises a server unit and at least one client unit. The server unit is designed to provide the at least one client unit with a visualization application, which comprises 360-degree panorama data of the automation system and function blocks defining interactions for interaction points. Furthermore, the server unit is designed to integrate the function blocks in such a way into the visualization application that an interaction linked to a respective interaction point can be triggered by selecting the respective interaction point shown in a 360-degree representation of the automation system. Furthermore, the server unit is also designed to exchange machine data with the automation system in real-time via at least one interface to make the machine data available for the function blocks and the interactions integrated into the visualization application. The at least one client unit is connected to the server unit via a real-time capable communication link and is designed to retrieve the visualization application from the server unit. Furthermore, the client unit is designed to interpret and execute the received visualization application in such a way, that the 360-degree panorama data of the automation system are displayed as the 360-degree representation of the automation system, wherein the displayed the 360-degree representation offers navigation through the automation system, and that the interaction points, which are displayed in the current displayed section of the 360-degree representation of the automation system, can be selected to trigger the interaction associated with the respective interaction point.

The main aspect of the present invention is that the visualized representation of the automation system displayed on a display device (e.g. display screen of a PC or of laptop computer, tablet PC or within Virtual reality (VR-)device or -headset, etc.) improved by using 360-degree panorama data for the representation of the automation system. 360-degree panorama data are, for example, data which enable to generate a software-based controllable or interactive representation of an object (e.g. an automation system) captured by a (usually 360-degree) camera in the form of photos or video. The 360-degree panorama data are derived, for example, from a panorama (e.g. spherical panorama, cylindrical panorama) or several individual images (e.g. cubic panorama) of the object captured by the camera, wherein the panorama or the several individual images are e.g. automatically stitched together by the camera software. The 360-degree panorama data then enables a representation of the captured object (e.g. automation system), in which the user has the option navigating through the representation - i.e., moving from one point of the representation to another to be able to view the different sections of the source images provided by the 360-degree panorama data on a display device.

Furthermore, the possibility of interactions with the automation system is enhanced by the system according the invention by integrating function blocks, which define interactions for interaction points, into the visualization application providing the 360-degree representation of the automation system. The interaction points and the linked interactions may be defined during the configuration of the visualization application. For example, points of special interest within the automation system (e.g., sensors, actuators, control units, etc.) may be defined as interactions points and linked with certain interactions, for which function blocks are integrated into the visualization application. The linked interaction can be triggered, when the respective interaction point shown e.g. as graphical control element on current section of the 360-degree representation of automation system displayed on the display device is selected.

Ideally, the server unit is designed to enable at least the following interactions, when selecting the corresponding interaction points embedded in the 360-degree representation of the automation system, by executing the corresponding function blocks of the visualization application:
- displaying current values of machine data (e.g. sensor data, control data, status information, etc.), which the server unit ideally retrieves and makes available in real-time via the at least one interface with the automation system;
- outputting at least one graphical input element on the 360-degree representation for entering values of machine data (e.g. parameters for sensors or actuators, setpoints for control units, etc.) and/or for acknowledging alarms, wherein the server unit transfers the values and/or acknowledgement entered by the user via the displayed graphical input element in real-time via the at least one interface to the automation system; and
- changing a user's perspective within the 360-degree representation of the automation system, e.g. by changing the viewpoint and showing another view of the automation system, by changing the viewing angle or by enlarging the display section of the automation system, thus providing the user with a zoom function offering the possibility to regard certain sections of the automation system in detail.

Thus, the user is provided with a holistic view of the automation system, which included the possibility of interaction with the automation system in real-time, and improves the efficiency of decision making.

It is advantageous, when the 360-degree panorama data derive from at least one image of the automation system captured by a 360-degree camera. A 360-degree camera, which is also called omnidirectional camera, is a camera having a field of view that can cover approximately the entire sphere or at least a full circle in the horizontal plane and which thus can provide 360-degree panorama data.

Alternatively, the system may comprise at least one 360-degree camera, which provides the 360 degree-panorama data in the form of a live stream and the server unit may be designed to provide the live data stream via the at least one interface in real-time. So, the system can provide the user with a live representation of automation system. This allows the user to monitor, what is currently happening in the automation system, and to check the effects of interactions such as parameter entries or changes, for example.

In a preferred embodiment of the invention, the systems, especially the server unit, provides an application framework. The application framework is designed to provide the function blocks defining the interactions for the interaction points and to link the interaction points with the respective interactions during the configuration of the visualization application. Thus, the user is allowed to configure a 360-degree representation of the automation system tailored to his/her needs.

Ideally, the position of a particular interaction point shown in the 360-degree representation of the automation system is definable during the configuration of the visualization application, by using either fixed coordinates within the coordinate system of the 360-degree representation or a variable, which is mapped to coordinates within the coordinate system of the 360-degree representation during runtime of visualization application. An interaction point is a point of special interest within the automation system (e.g., sensors, actuators, control units, a position with the automation system, where a special view is needed, etc.). The position of the interaction point within the 360-degree representation can be defined by entering a fixed predefined datapoint - e.g. fixed coordinates within the coordinate system of the 360-degree representation. These coordinates entered during configuration are then used to show the interaction point (e.g., a graphical control element) during runtime of the visualization application on the display. Alternative, it is possible to define the position of an interaction point using a variable. This variable is then mapped to the respective coordinates of a point of interest (e.g., sensors, actuators, control units, etc.) during runtime of the visualization application, wherein the point of interest, which shall be shown as interaction point in the 360-degree representation, can be predefined during configuration. The coordinates, the variable for the interaction point is mapped to, may derive from mapping data provided by at least one control unit of the automation system, for example. The interaction point is then dynamically displayed in the 360-degree representation of the automation system and it is not necessary for the user, to know the exact coordinates of the wished point of interest with the 360-degree representation of the automation system.

It is also useful, if the server unit and the at least one client unit are web-based, wherein the visualization application can be retrieved from the server unit using a web browser provided by the client unit. The 360-degree representation of the automation system and the embedded interaction points can thus be used easily within a web browser. The system may be implemented by using common web standards like e.g., HTML5, CSS3 and JavaScript. So-called widgets, which are software-based components may be used by the visualization application to display the 360-degree representation and to provide the user with the possibility to navigate through the 360-degree representation and to interact with the embedded interaction points via mouse or touchscreen events. A widget is a software-based program element or window element, which can be embedded on a web site, provides the functionality to react on mouse-, touchscreen- or keyboard-events and can adapt its appearance or visible section.

Alternatively, a gyroscope or position and motion sensors, integrated in the display device, can be used for navigation through the 360-degree representation of the automation system. For example, if a VR-headset is used, an integrated gyroscope or integrated position and motion sensors can be used to control the viewing direction and the perspective of automation system shown by the user's movements.

It is also advantageous, when the communication link between the server unit and the at least one client unit is a wired or a wireless communication link. This enables flexible use of the system and the use of different display units for running the client unit and for displaying the 360-degree representation of the automation system like e.g. display screens of PCs or laptop computers, tablet PCs or the usages of VR-devices (e.g. headset). Furthermore, Ethernet technology (e.g., Ethernet Powerlink, Profinet, etc.) is used for the data exchange in real-time on the communication link between the server unit and the client unit, in case of a wired communication link. Wireless LAN or W-LAN may be used for a wireless communication link between the server unit and the client unit.

Ideally, the server unit of the system is integrated into a control unit of the automation system, especially a central control unit. The server unit may run on an industrial PC or on a Programmable Logic Controller (PLC) which are used as control unit. This has the advantage that the system and, in particular, the server unit is directly integrated into the automation system. The server unit can, for example, use the access or interface of the control unit to the machine data. A real-time-capable industrial communication technology, such as OPC-UA (short for OPC Unified Architecture), especially OPC-UA FX (short for OPC-UA Field eXchange) or MQTT (short for MQ Telemetry Transport) is advantageously used as the protocol for exchanging the machine data. OPC-UA is, for example, a cross-platform, open-source, IEC62541 standard for data exchange from automation components (e.g. sensors) of an automation system to applications. OPC-UA FX, formerly OPC UA over TSN, is a combination of open and standard technologies like OPC UA and TSN (short of Time-sensitive Networking), which fulfills all the requirements from industrial applications, while delivering all of the flexibility and interoperability known from IT, and enables reliable communication of devices from different manufacturers in real-time using a uniform, open standard.

### BRIEF DESCRIPTION OF THE DRAWINGS

In the following, the present invention will be described in greater detail with reference to Figures 1 to 3, which show exemplary, schematic and non-limiting advantageous embodiments of the invention. In the drawings:
Fig. 1 shows a block diagram of the visualization system according to the invention;
Fig. 2 shows a section of the 360-degree representation of the automation system with an exemplary embedded interaction point on a display device;

### DETAILED DESCRIPTION

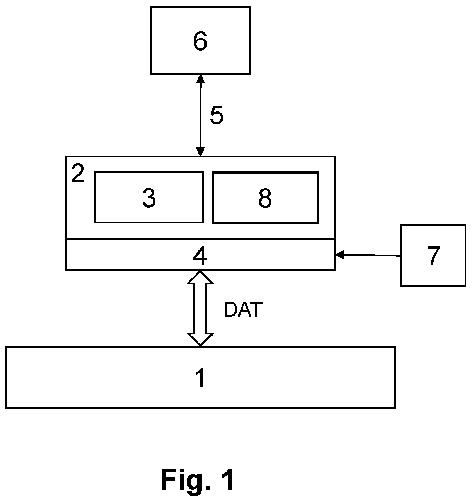

Figure 1 shows schematically an exemplary embodiment of the system for visualizing an automation system 1 according to the invention. The automation system 1 may be a single robot, robot system, an automated machine, flexible manufacturing cell or a transport system for moving objects or products from one workplace to another. The system for visualizing the automation system 1 at least comprises a server unit 2 and at least one client unit 6 running on a display device 9. Usually, there are several client units 6 which may run on different display devices 9 like a display screen of a PC or laptop computer, a tablet PC or within a VR-headset.

The server unit 2 and the at least one client unit 6 are connected by a real-time capable communication link 5, which may be a wired communication link using Ethernet technology or a real-time capable Ethernet protocol, like e.g., Ethernet Powerlink, Profinet, etc., for communication between the server unit 2 and the at least one client unit 6. The communication link 5 may also be a wireless communication link 5 using W-LAN. The server unit 2 and the at least one client unit 6 may be designed as web-based units. I.e., that the server unit 2 is designed as a webserver which is connected with one or more web browsers running on the client unit 6 via the communication link 5. Since the structure and the functionality of such a web-based server-client solution is very well known, further details will not be discussed here. However, any other IT infrastructure and/or network technology (e.g., Windows technology, Linux, etc.) that enables the realization of a client-server model can also be used to realize the system.

The server unit 2 is designed to comprise and provide components which realize the server functionalities. The server unit 2 is designed to provide a visualization application 3 for the at least one client unit 6. The visualization application 3 comprises 360-degree panorama data PA_DAT of the automation system 1 for the 360-degree representation of the automation system 1 on a display device 9. These 360-degree panorama data PA_DAT may derive from at least one image of the automation system 1 captured by a 360-degree camera. These static 360-degree panorama data may be stored in the server unit 2 and provided to the visualization application 3.

Alternatively, the system may comprise at least one 360-degree camera 7, which provides the 360-degree panorama data PA_DAT of the automation system 1 in the form of a live data stream. The camera 7 may be connected to at least one interface 3 being capable of real-time data transmission and the server unit 2 may be designed to provide the live data stream of the 360-degree panorama data PA_DAT captured by the camera 7 in real-time to the visualization application 3. The live data stream of the camera 7 provided as 360-degree panorama data PA_DAT can, for example, be used for monitoring the operation of an automation system 1 using the in the 360-degree representation of the automation system 1. In particular, the proper function of a transportation system, e.g. movement of the transport units, can be monitored.

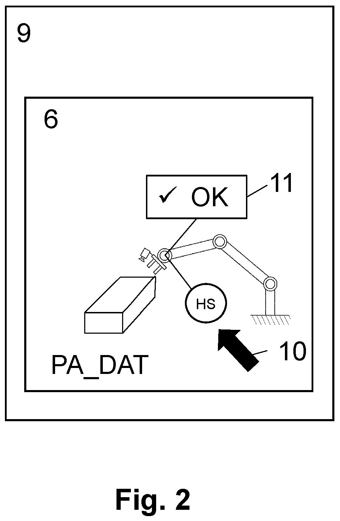

The visualization application 3 may also comprise function blocks (e.g., small executable program elements which trigger predefined interactions), which define interactions for interaction points HS. Such interaction points HS, which represent points of interest (e.g., sensors, actuators, control unit, a position with the automation system, where a special view is needed, etc.) for the user within the automation system 1, can be marked by e.g., graphical control elements in the 360-degree representation of the automation system 1. The position of interaction points HS within the 360-degree representation as well as the interactions linked to the interaction point HS can be defined during a configuration of the visualization application 3. The server unit 2 is therefore also designed to integrate the function blocks in such a way into the visualization application 3 that an interaction linked to a respective interaction point HS can be triggered by selecting the respective interaction point HS embedded in the 360-degree representation of the automation system 1 on the client unit 6 or in the 360-degree representation of the automation system 1. This will be described in detail below using Figure 2.

The system or the server unit 2, respectively, provides an application framework 8. This application framework 8 can be used by a user to define the interactions, which can be triggered at the interaction points HS within the 360-degree representation of the automation system 1 and to link the interaction points HS with the desired interactions during the configuration of the visualization application 3. The application framework 8 is therefore designed to provide the function blocks which can be integrated into the visualization application 3. The application framework 8 may be designed as a toolbox, which offers the function blocks, for example, in the form of graphical elements, which may be linked to a position of the particular interaction point HS within the 360-degree representation of the automation system 1 during the configuration of the visualization application 3. The position of the particular interaction point HS can be defined either by entering fixed coordinates within the coordinate system of the 360-degree representation during the configuration of the visualization application 3 or by using a variable. Said variable can be linked to a certain point of interest (e.g. sensor, actuator, control unit, etc.) and an interaction during the configuration of the visualization application 3. During runtime of the visualization application 3, the variable is mapped to the respective coordinates of the linked point of interest, wherein the coordinates may derive from mapping data provided by at least one control unit of the automation system 1, for example. In both cases, the interaction point HS is then shown in the 360-degree representation of the automation system 1 and marked with e.g., graphical control element at the position defined during configuration.

Furthermore, the server unit 2 can be designed to exchange machine data DAT with the automation system 1 in real-time via the at least one interface 4. These machine data DAT can be made available to the visualization application 3, especially for usage by the function blocks. The at least one interface 4 may use a real-time capable industrial communication technology, like OPC-UA, especially OPC-UA FX, or MQTT, for example. The interface 4 is used by the server unit 2 to exchange machine data DAT with the automation system 1. These data are e.g. sensor data, control data, status information, etc., which are requested and retrieved by the server unit 2 from the respective components (e.g., sensor, control units, etc.) of the automation system 1 via the interface 4, and/or values of machine data (e.g. parameters for sensors or actuators, setpoints for control units, etc.) or alarm acknowledgements, which are transferred to the respective components (e.g., sensors, actuators, control units, etc.) of the automation system 1 via the interface 4. These data may be used or derive from interactions of a user with interaction points embedded in the 360-degree representation of the automation system 1 on the display device 9.

The server unit 2 can be integrated into a control unit of the automation system 1 and thus run on an industrial PC or a PLC of the automation system 1, for example. But it is also possible that the server unit 2 is hosted and runs on a separate computer unit, which is connected to the automation system 1 via the at least one interface 4. For example, the separate computer unit may be a Linux device - i.e. it may use Linux as operating systems.

The at least one client unit 6, which runs on the display device 9, is designed to retrieve the visualization application 3 from the server unit 2 via the communication link 5. In case of a web-based client unit 6, it uses a web browser to retrieve the visualization application 3 from the server unit 2. The client unit 6 is further designed to interpret and execute the received visualization application 3 in such a way, that the 360-degree panorama data PA_DAT of the automation system 1 are displayed as 360-degree representation of the automation system 1. For example, a widget may be used to display the 360-degree representation of the automation system 1 in a web browser, wherein the interaction points HS embedded in the 360-degree representation of the automation system 1 may marked by graphical control elements shown on the representation. A user can then navigate in the 360-degree representation of the automation system 1 and view the automation system 1 from different perspectives using appropriate control elements, e.g. cursor, mouse pointer, touchscreen events, etc., depending on the display device used. If a VR-headset or a tablet PC is used as display device 9, an integrated gyroscope or integrated position and motion sensors can be used for the navigation within the automation system 1 based on the movement of the display device 9. If the user now navigates in the 360-degree representation of the automation system 1, the interaction points HS, or better to say, the graphical control elements marking the interaction points HS are displayed, as soon as the user reaches a section of the 360-degree representation of the automation system 1 with one or more of the predefined interaction points HS. These interaction points HS then can be selected by using the appropriate control element provided by the display device 9 and interactions linked with the respective interaction points HS can be triggered by selecting the interaction points HS.

Figure 2 shows schematically and exemplary a display device, e.g. a tablet PC, on which the client unit 6 is running using, for example, a web browser to display a section of the 360-degree representation of the automation system 1, e.g. a robot system, on the screen of the display device 9. This section of the 360-degree representation of the automation system 1 is based on the 360-degree panorama data PA_DAT provided by the visualization application 3 and the server unit 2. The user, for example, can navigate in the 360-degree representation of the automation system 1 to reach the exemplary displayed section of 360-degree representation of the automation system 1 using the gyroscope or position and motion sensors integrated into the tablet PC, wherein the movements of the tablet PC are used to control the viewing direction and the perspective shown in the displayed section.

The displayed section comprises an exemplary interaction point HS embedded in the displayed section of 360-degree representation of the automation system 1. The interaction point HS is marked by a graphical control element HS, which may be selected with the help of a control element 10, e.g. a mouse pointer 10, provided by the display device 9. If the tablet PC offers a touchscreen, the graphical control element can also be selected by a touch screen event 10 (e.g., a touch of the finger or with a tablet pen) to trigger an interaction linked to the interaction point HS.

In the exemplary embodiment shown in Figure 2, the interaction point HS is, for example, linked to the interaction of displaying a current value or status of machine data DAT of an automation component, e.g., a sensor of the robot displayed. When the interaction point HS is selected by user, the current status information of the automation component is displayed in a graphical output element 11 (e.g., text field, gauge control, bar graph, etc.) on the 360-degree representation of the automation system 1 on the client unit 6. This interaction is enabled by the visualization application 3, in particular by at least one function block integrated into the visualization application 3, and by the server unit 2. The server unit 2 ideally retrieves the necessary machine data DAT in real-time via the at least one interface 4 from the respective component of the automation system 1 and makes the data DAT available to the visualization application 3 for displaying it as e.g. current status information in the graphical output element 11.

Other interactions, which can be triggered by selecting an interaction point HS provided by the 360-degree representation of the automation system 1 may at least comprise entering values of machine data DAT (e.g. parameters for sensors or actuators, setpoints for control units, etc.) and/or for acknowledging alarms and changing a user's perspective within the 360-degree representation of the automation system 1.

If the interaction, triggered by selecting the interaction point HS, is, for example, entering values of machine data DAT, e.g. to parameterize a sensor or a setpoint value, etc. or to acknowledge an alarm, then a graphical input element 11 will be opened on the displayed section of the 360-degree representation of the automation system 1. The user can then enter the necessary or required data, values or information into the graphical input element 11 on the display device 9. When the data entry is finished, the visualization application 3 and the server unit 2 provide the necessary functionalities to transfer the user's input (e.g., parameter values, acknowledgements, information) to the respective component of the automation system 1 via the interface 4 in real-time.

If the interaction, triggered by selecting the interaction point HS, is changing a user's perspective within the 360-degree representation of the automation system 1, then, for example, the viewpoint or the viewing angle of the user within the displayed section of 360-degree representation of the automation system 1 may be changed showing the user another side or aspect of the displayed section. It is also possible that the interaction triggered by the interaction point HS provides the user with an enlarged view of details of the section displayed. E.g., the system zooms into a subsection of the displayed section of 360-degree representation of the automation system 1 on the display device, so that the user can regard or monitor that particular section in detail. Thus, the interaction points embedded in the 360-degree representation of the automation system 1 can also be used to enhanced the navigation and improve monitoring the automation system 1, in particular during operation.

The system can be used for a wide range of applications in automation systems. For example, the system according to the invention can be used in manufacturing facilities to provide 360-degree views of automation systems 1 used for manufacturing with real-time production data to monitor, supervise and analyze equipment status and operational metrics. Furthermore, the system according to the invention may be used for training creating 360-degree training simulation of complex industrial automation systems 1 allowing users and/or trainees to train machinery operation with access to the 360-degree representation of the automation system 1. The system can also be used for safety trainings, e.g. enabling users to interact with safety protocols and emergency procedures, while using the 360-degree representation of the automation system 1. Furthermore, the system may be used for maintenance and repair offering virtual equipment inspections (e.g. by using interaction points providing zoom functions) and using live performance data of the automation system 1 in real-time for analysis of automation components. The system can also be used for quality control and inspection, by integrating the live data provided by the system into virtual inspection processes. The system may also allow detailed visual inspection of products, components, etc. in real-time, in case a live data stream is used as 360-degree panorama data PA_DAT and in case interaction points triggering zoom function are embedded at appropriate positions in the 360-degree representation of the automation system 1.

## Claims

1. System for visualizing an automation system (1), in particular a robot, a robot system, an automated machine and/or a transportation system, at least comprising:
• a server unit (2), which is designed to provide at least one client unit (6) with a visualization application (3), which comprises 360-degree panorama data (PA_DAT) of the automation system (1) and function blocks defining interactions for interaction points (HS) and to integrate the function blocks in such a way into the visualization application (3) that an interaction linked to a respective interaction point (HS) can be triggered by selecting the respective interaction point (HS) embedded in a 360-degree representation of the automation system (1), and which is furthermore designed to exchange machine data (DAT) with the automation system (1) in real-time via at least one interface (4) to make the machine data (DAT) available for usage by the function blocks integrated into the visualization application (3); and
• at least one client unit (6), which is connected to the server unit (2) via a real-time capable communication link (5), and which is designed to retrieve the visualization application (3) from the server unit (2) and to interpret and execute the received visualization application (3) in such a way, that the 360-degree panorama data (PA_DAT) of the automation system (1) are displayed as 360-degree representation of the automation system (1), wherein the 360-degree representation offers navigation, and that the interaction points (HS), which are displayed in the current displayed section of the 360-degree representation of the automation system (1), can be selected to trigger the interaction associated with the respective interaction point (HS).

2. System according to claim 1, ***characterized in that*** the server unit (2) is designed to enable at least the following interactions, when selecting the corresponding interaction points embedded in the 360-degree representation of the automation system (1), by executing the corresponding function blocks of the visualization application (3):
• displaying current values of machine data (DAT) and retrieving the current values of machine data (DAT) from the automation system (1) in real-time via the at least one interface (4) with the automation system (1);
• outputting at least one graphical input element on the 360-degree representation of the automation system (1) of entering values for machine data (DAT) and/or for acknowledging alarms and transferring the entered values and/or acknowledgments to the automation system (1) in real-time via the at least one interface (4) with the automation system (1); and
• changing a user's perspective within the 360-degree representation of the automation system (1).

3. System according to claim 1 or 2, ***characterized in that the*** 360-degree panorama data (PA_DAT) derive from at least one image of the automation system (1) captured by a 360-degree camera (7).

4. System according to claim 1 or 2, ***characterized in that*** the system comprises at least one 360-degree camera (7), which provides the 360-degree panorama data (PA_DAT) in the form of a live stream and that the server unit (2) is designed to provide the live stream via the at least one interface (4) in real-time.

5. System according to one of the claims 1 to 4, ***characterized in that*** the system provides an application framework (8), which is designed to provide the function blocks defining the interactions for the interaction points (HS) and to link the interaction points (HS) with the respective interactions during the configuration of the visualization application (3).

6. System according to one of the claims 1 to 5, ***characterized in that*** a position of an interaction point shown in the 360-degree representation of the automation system is definable during the configuration of the visualization application, by using either fixed coordinates within the coordinate system of the 360-degree representation or a variable, which is mapped to coordinates within the coordinate system of the 360-degree representation during runtime of visualization application.

7. System according to one of the claims 1 to 6, ***characterized in that*** the server unit (2) and the at least one client unit (6) are web-based, wherein the visualization application (3) can be retrieved from the server unit (2) using a web browser provided by the client unit (6).

8. System according to one of the claims 1 to 7, ***characterized in that*** the communication link (5) between the server unit (2) and the at least one client unit (6) is a wired or a wireless communication link (5).

9. System according to one of the claims 1 to 8, ***characterized in that*** the interface (4) used by the server unit (2) for exchanging the machine data (DAT) with the automation system (1) in real-time uses a real-time capable industrial communication technology, in particular OPC-UA, especially OPC-UA FX.

10. System according to one of claims 1 to 9, ***characterized in that*** the client unit (6) runs on a display device (9), in particular on a display screen of a PC or laptop computer, a tablet PC or within VR-headset.

11. System according to one of claims 1 to 10, ***characterized in that*** the server unit (2) is integrated into a control unit of the automation system (1), especially a central control unit.
